# EUROPEAN PATENT APPLICATION

(11) **EP 4 570 377 A1**
(43) Date of publication of application: **18.06.2025**
(21) Application number: 23216492.1
(22) Date of filing: 13.12.2023
(51) Int. Cl.: B02C 4/08, B02C 4/28, B02C 4/32, B02C 4/42

(54) **HPGR WITH RADAR MONITORING**

(71) Applicant: Metso USA Inc., Brookfield, WI 53045 (US)
(72) Inventor: Sakendorf, Stefan, Hamilton Hill, Western Australia 6163 (AU); Alatrash, Ali, Surrey, BC V3S 7K7 (CA)
(74) Representative: Hoffmann Eitle

(57) **Abstract**

The invention concerns high pressure grinding roll (HPGR) machines. These machines have rolls that are provided with studs. In order to monitor the condition of the studs during operation of such a machine to detect wear of studs, cracking of studs, missing studs, and/or breakage of studs, a radar system 44a is provided on a linear drive 46a. The radar system 44a is arranged to emit a radar beam onto an outermost surface of the roll 14 and to produce a radar system output indicative of a distance between the radar system and the outermost surface of the roll. The HPGR machine further having a monitoring system having processing means connected to the radar system and configured to analyse the radar system output and determine a condition of the outermost surface of the roll.

## Description

### Technical Field

The present disclosure relates to high pressure grinding rolls with radar monitoring of the rolls.

### Background

High pressure grinding rolls (HPGR) are used in the mining and mineral processing industries to crush rocks and minerals. An HPGR uses two parallel cylinders (the rolls) that are spaced apart to form a gap between their outer surfaces. Material to be ground down or crushed is fed into the gap while the cylinders are rotated in opposite directions. The material in the gap is crushed by pressure between the two rolls.

In some designs of HPGR, a plurality of studs are formed on the outer surface of one or both rolls. These studs are typically made of a harder material than the cylinder. The studs assist in grinding down the rocks. The studs also help in the formation of an autogenous layer of ground material that adheres to the surface of the cylinder, between the studs. This autogenous layer can protect the surface of the cylinder from wear. If a stud breaks off from its mounting position on the cylinder, it can cause substantial damage to the surface of the cylinder, given its hardness. It is desirable to monitor the condition of the studs during operation of the HPGR to detect wear of studs, cracking of studs, missing studs, and/or breakage of studs.

### Summary

The invention is as defined in the independent claim further below. The dependent claims recite preferred further embodiments.

A high pressure grinding roll (HPGR) machine for grinding material as claimed and described herein therefore comprises a first roll and a second roll, each roll having a longitudinal rotational axis and a cylindrical outer surface. The first roll and the second roll are arranged such that their longitudinal axes are parallel, and such that a gap is formed between the outer surfaces of the rolls. The high pressure grinding roll (HPGR) machine further comprises a first plurality of studs. The studs of the first plurality are mounted on and extend radially outward from the outer surface of the first roll. A first radar system is also provided, the first radar system being arranged to emit a radar beam onto an outermost surface of the first roll and to produce a first radar system output indicative of a distance between the radar system and the outermost surface of the first roll. The outermost surface of the first roll comprises one or more of: the outer surface of the first roll, the plurality of studs, and an autogenous layer of crushed material adhering to the outer surface of the roll. The HPGR machine further comprises a monitoring system comprising processing means connected to the radar system and configured to analyse the first radar system output and determine a condition of the outermost surface of the first roll.

In the HPGR machine, the first radar system is preferably a synthetic aperture radar.

In accordance with the claimed HPGR machine, the radar system may be mounted on a linear drive, the linear drive being arranged to move the radar system along an axis parallel to the longitudinal rotational axis of the first roll. The range of movement is preferably such as to allow the first radar system to scan the entire axial length the first roll. More preferably still, the monitoring system is configured to use positional information from the linear drive in the process of determining a condition of the outermost surface of the first roll.

In an arrangement with linear drives or in another arrangement which permits to capture the entire axial length of the first roll, the HPGR machine can further comprises a first speed sensor for determining a rotational speed of the first roll. The first speed sensor will then be communicatively connected to the monitoring system. If the monitoring system is configured to use speed data from the first speed sensor to calibrate data received from the first radar system and from the linear drive, a height map of the outermost surface of the roll can be formed.

In accordance with the claimed HPGR machine, the processing means are configured to have a first operational mode and a second operational mode.

The first operational mode is preferably a continuous scanning mode in which the current distance measured between the first radar system and a given location on the outermost surface of the roll is compared to a previously-measured distance between the first radar system and the given location that was measured during a previous revolution of the roll. More preferably, the monitoring system is configured to output an alert when the current distance is different from the previously-measured distance by more than a predetermined amount, the alert indicating the location on the roll corresponding to the given location. The predetermined amount may be about 2 mm but can be more or less than that.

The second operational mode is preferably a wear measurement mode to be performed while the rolls are rotating, and no grinding material is present in the gap. A processing means is then more preferably, firstly, configured to identify a distance from the first radar system to each stud of the plurality of studs, and to determine a height of each stud above the outer surface of the roll to an accuracy of greater than 0.5 mm, and secondly to compare the determined height of each stud to an expected height that is derived from a stud in the new condition. This permits to calculate a wear condition of each stud based on the difference between the determined height and the expected height. Still more preferably, the processing means is then configured to identify a set of worn studs and output the location on the roll outer surface of each stud of the set of worn studs. In the context of this disclosure, worn studs are understood as being those whose wear condition is below a predetermined threshold.

The HPGR machine claimed and described herein may further comprise a second radar system arranged to monitor a second plurality of studs on the outer surface of the second roll. If it does, the second radar system would preferably be configured to produce a second radar system output to the monitoring system. The second radar system output can, for instance, be indicative of a distance between the second radar system and the outermost surface of the second roll.

The HPGR machine claimed and described herein may further comprise a housing and a skew control mechanism so as to maintain the rolls at the desired distance, preferably also distance and angle relative to one another.

The skew mechanism would act on at least one, preferably on one of the longitudinal axes of the rolls. In this preferred embodiment, the first roll is fixed relative to the housing, and the second roll is movable relative to the housing such that the size of the gap between the surfaces of the roll is variable. The second roll would then be operably connected to the skew control mechanism, and the skew control mechanism would be configured to control movement of the longitudinal axis of the second roll and thereby control the size of the gap. It is alternatively possible to have the longitudinal axis of the second roll be fixed relative to the housing, and the longitudinal axis of the first roll be movable relative to the housing such that the size of the gap is variable. The first roll would then be operably connected to the skew control mechanism, and the skew control mechanism would be configured to control movement of the longitudinal axis of the first roll and thereby control the size of the gap. In either of these alternatives, the skew control mechanism can further be configured to maintain the longitudinal axes of the rolls parallel each other.

### Brief Description of the Drawings

Figure 1 shows an HPRG machine;
Figure 2 shows a perspective view of two rolls of an HPGR machine;
Figure 3 shows a perspective view of two rolls within an HPGR machine;
Figure 4 shows a cross-section of the two rolls;
Figures 5 and 6 each depict one roll;
Figure 7 shows a monitoring system for monitoring the rolls;
Figures 8 and 9 show a radar system and linear drive for monitoring a roll;
Figure 10 depicts a linear drive and linear drive control;
Figure 11 shows a radar unit;
Figures 12-14 show radar systems each incorporating two radar units;
Figure 15 shows a linear drive;
Figure 16 is a height map of the outermost surface of the roll as measured using the radar system;
Figure 17A shows a portion of a roll having studs and some autogenous layer;
Figure 17B is a height map determined from radar data of the roll portion shown in Figure 17A;
Figure 18A depicts a worn stud;
Figure 18B is a height map determined from radar data of the worn stud of Figure 18A;
Figure 19 is another height map determined from radar data of the outermost surface of a roll;
Figure 20 is another height map that includes monitoring of one or more end plates of the roll;
Figure 21 is another monitoring system of monitoring the rolls;
Figure 22 shows three height maps generated using different compensation methods to compensate for variable roll speed during rotation; and
Figure 23 shows a speed sensor and the metal piece it detects during rotation of the roll.

### Detailed Description

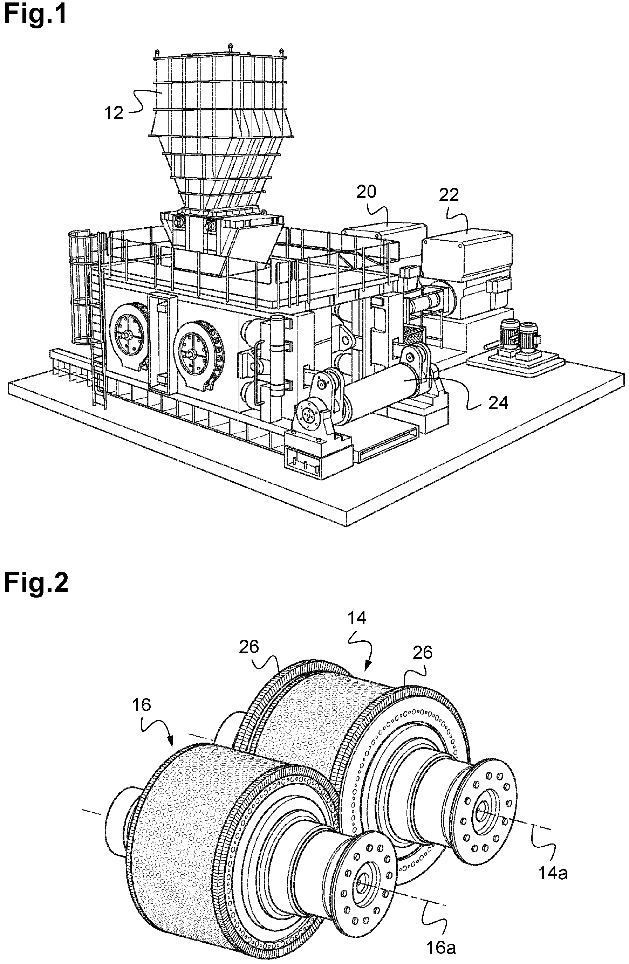

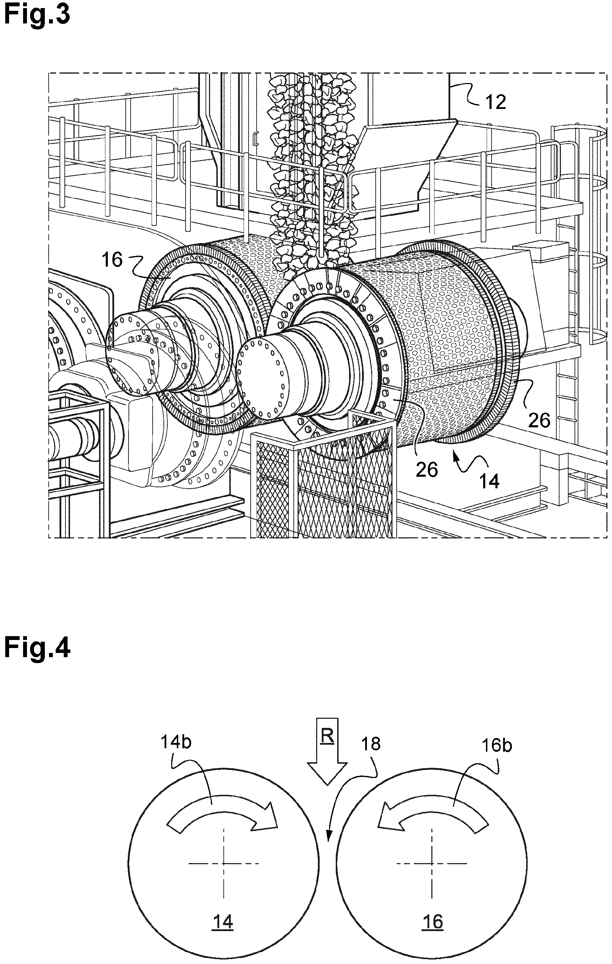

Figure 1 shows a high pressure grinding roll (HPGR) 10 machine. The HPGR 10 comprises a hopper 12 (or chute) mounted above two rolls 14,16 which are depicted in Figures 2, 3, and 4. Each roll 14,16 has a respective axis of rotation 14a,16a. The rolls 14,16 are arranged such that their axes of rotation 14a,16a are parallel to one another. In this arrangement, a gap 18 is formed between the two rolls 14,16. The gap 18 is defined herein as the narrowest point between the two rolls 14,16. With brief reference to Figure 4, during operation, material to be crushed is fed (i.e., from the hopper 12) to the rolls 14,16 from the top side of the rolls 14,16, in the direction marked with the arrow R. The material may briefly sit in a region defined between a vertically-uppermost portion of the rolls and the gap. The rolls 14,16 are rotated in the direction depicted by the curved arrows 14b,16b such that, at the gap 18, the outer surface of each of the rolls 14,16 is moving downwards. This motion pulls material sitting in the aforesaid region into the gap 18 to be crushed.

Each of the rolls 14,16 is rotated by a respective drive motor 20,22 (Figure 1). A first 14 of the two rolls is mounted such that its axis of rotation 14a is fixed relative to the ground and relative to the hopper 12. The second 16 of the two rolls is mounted such that its axis of rotation 16a is floating, such that a linear distance between the two axes 14a,16a is variable. A skew control system 24 is provided. In this embodiment, the skew control system is mechanical. The skew control system supports the second roll 16 so as to allow the second roll to float (i.e., to allow the linear distance to vary) while also maintaining the two axes 14a,16a parallel to each other. As such, the size of the gap 18 varies within limits determined by the skew control system 24.

The two rolls 14,16 have substantially equal length. The two rolls 14,16 are arranged such that a first end of the first roll 14 is axially aligned with a first end of the second roll 16 and such that a second end of the first roll 14 is axially aligned with a second end of the second roll 16.

Typical lengths for the rolls are between 250 mm and 2000 mm. Typical diameters are between 800 mm and 4000 mm.

Each roll may be provided with one or more end plates 26 to ensure material from the hopper 12 enters the gap 18 and does not fall off one axial end of the rolls 14,16. Typically there will be two sets of the one or more end plates, with one set located adjacent the first ends of the rolls and the other set located adjacent the second ends of the rolls. The one or more end plates 26 on one roll (for example, the first roll 14) describe an annular or circular profile having a larger radius than the first roll 14. The radius of the profile is equal to or larger than the sum of the radius of the first roll and the maximal size of the gap 18. This ensures that the one or more end plates 26 on the first roll 14 overlap with the second roll 16. The overlap prevents material from falling out of the axial end of the gap 18 or falling out of the axial ends of the rolls above the gap 18. In some examples, one roll has end plates 26 at either axial end. In other examples, one roll has axial plates at one axial end and the other roll has axial plates at the other axial end.

In some examples, a roll is provided with a single axial end plate that describes a complete annulus. However, since rolls in an HPGR may be several meters in diameter, a unitary end plate must then also have a diameter of several meters. Such a large unitary end plate may be difficult to construct, mount, maintain, and/or replace. Therefore, in other examples, a plurality of end plates 26 may be provided, wherein each end plate describes a segment of the overall annulus, such that individual end plates 26 may be constructed, mounted, and/or replaced separately to other end plates 26 forming the annulus.

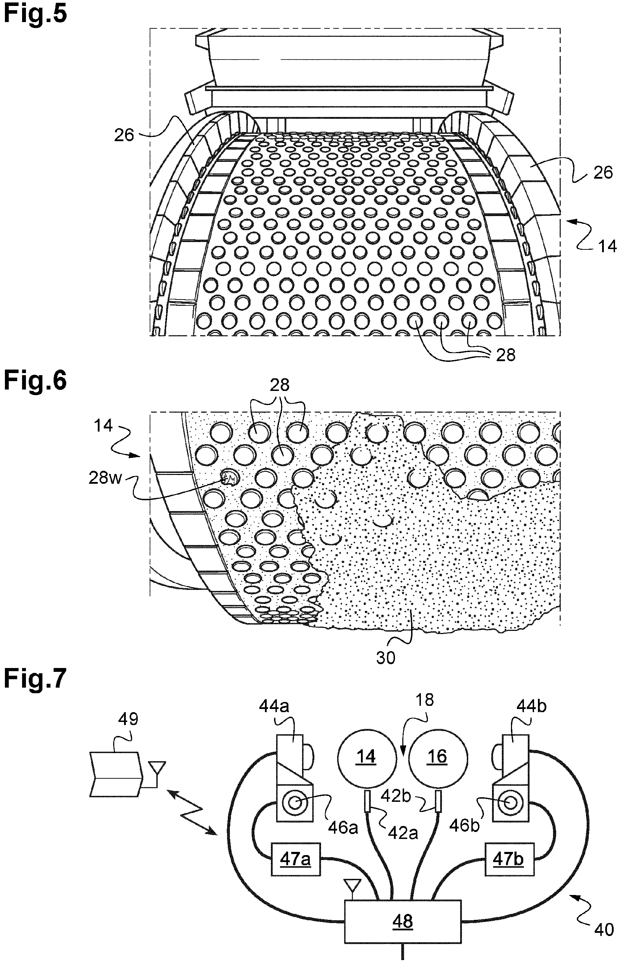

Figures 5 and 6 are depictions of the first roll 14 in an HPGR 10. The pictured roll is part of a machine that is a test model. The test model was designed to be smaller, following the principles of dimensional analysis, than a full-size HPGR that may have a roll diameter of several meters. Other than this change of diameter, the operation of the test model is the same as a full-size HPGR.

Figure 5 shows the first roll 14 having a plurality of studs 28 mounted on its outer surface. The first roll 14 has end plates 26 at either axial end of the roll 14. Figure 6 shows the first roll 14 (with the end plates 26 removed) after use where an autogenous layer 30 has formed between the studs 28. The autogenous layer 30 is formed of crushed material that collects between the studs 28 during operation. The autogenous layer 30 gets compacted onto the outer surface of the roll 14 due to the pressure from crushing material.

Figure 6 also shown a worn stud 28w. The studs 28 are made from a hard material, such as tungsten carbide. This material of the studs 28 is typically harder than a material of the outer surface of the rolls 14,16.

The studs 28 are replaceable components and when a given stud 28 is excessively worn or when a stud 28 breaks off, it can be replaced. As the studs 28 are of harder material than the outer surface of the rolls 14,16, a broken off stud that gets pulled into the gap 18 can cause substantial damage the outer surface of the rolls 14,16. As such, it is desirable to monitor the condition of the studs 28 during operation of the HPGR 10.

Figure 7 schematically depicts an HPGR 10 with a monitoring system 40. The monitoring system 40 may, in some examples, only monitor one roll of the HPGR 10. In other examples, the monitoring system may monitor two rolls of the HPGR 10.

The main components of the monitoring system 40 will now be described in relation to monitoring one roll, the first roll 14, of the HPGR 10. The description nevertheless also applies to the monitoring of the second roll 16, or of both rolls. The monitoring system comprises a first speed sensor 42a for monitoring a rotational speed of the first roll 14 The speed sensor 42a may be located at or beyond an axial end of the first roll 14. For example, the speed sensor 42a may monitor a rotation speed of an axle of the first roll 14 and this may be converted into a rotation speed of the outer surface of the roll 14. For example, the axle may have a plurality of metal pieces (optionally, magnetic metal pieces) that are spaced at equal angles around its circumference and the speed sensor may comprise an induction sensor that is fixed at a location such that, as the roll 14 rotates, each metal piece passes the induction sensor in turn. The passing of each piece is detected as a pulse by the induction sensor. The timing between pulses and/or width of the pulses may be converted to a rotational speed of the roll 14. One metal piece may have a central gap such that it produces two signals in the induction sensor in quick succession. This signal, which is different from the signals produced from the other metal pieces, may allow determination that a full revolution of the roll has occurred.

The monitoring system 40 further comprises a first radar system 44a that is mounted to a first linear drive 46a. The first radar system 44a and first linear drive 46a are communicatively connected to a control unit 48. The first speed sensor 42a is also communicatively connected to the control unit 48. The first linear drive 46a is, in this example, controlled by a first linear drive control 47a which is communicatively connected to the control unit 48. The first linear drive control 47a may communicate a position of the linear drive to the control unit 48, which gives a position of the radar system 44a relative to the rotational axis 14a of the roll 14.

The control unit 48 may be communicatively connected (e.g., via a wired connection or a wireless connection) to a computer 49, such as a laptop or PC.

The first radar system 44a is arranged on a side of the roll 14 substantially opposite to the gap 18. This ensures the first radar system 44a is spaced apart from any material (rocks, minerals etc.) coming from the hopper 12 to the gap 18, and is also spaced apart from any material exiting the gap 18 on the lower side of the rolls 14,16. In the schematic shown in Figure 7, if the position of the most narrow part of the gap defines a 0° position of the first roll 14, then the first radar system is equal to or more than 90° and equal to or less than 270° spaced apart from the gap, in a counter-clockwise circumferential direction of the first roll 14 as shown in Figure 7. Such a position eases mounting of the radar system 44a onto the monitoring system 40. In this arrangement, material from the hopper 12 will be coming into contact with the first roll 14 between the 0° position and <90° position (i.e., the vertically-uppermost part of the first roll 14).

As discussed below, a second radar unit 44b may be provided. In the schematic shown in Figure 7, if the position of the most narrow part of the gap defines a 0° position of the second roll 16, then the second radar system 44b is equal to or more than 90° and equal to or less than 270° spaced apart from the gap 18, in a clockwise circumferential direction of the second roll 16 as shown in Figure 7. Such a position eases mounting of the radar system 44b onto the monitoring system 40.

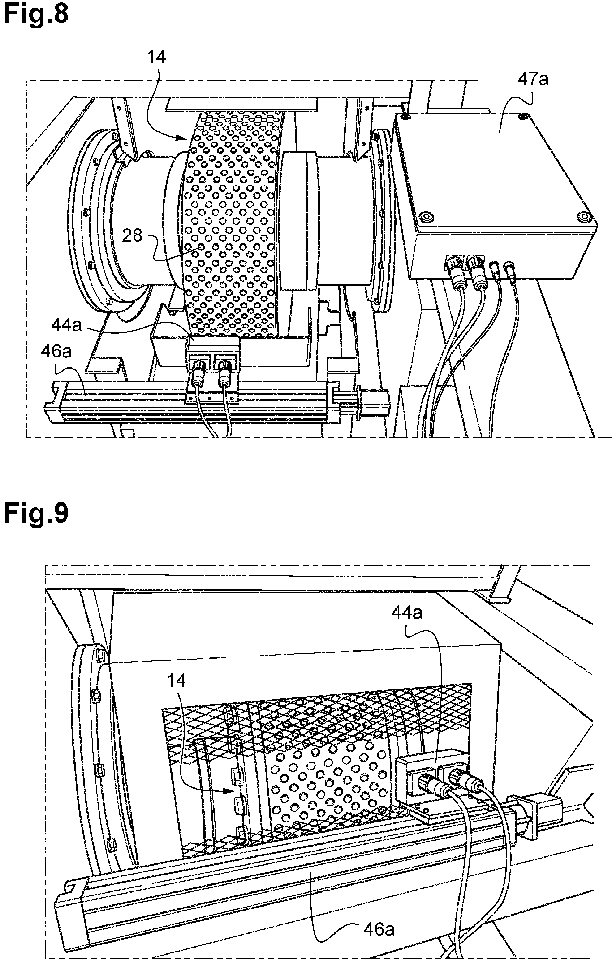

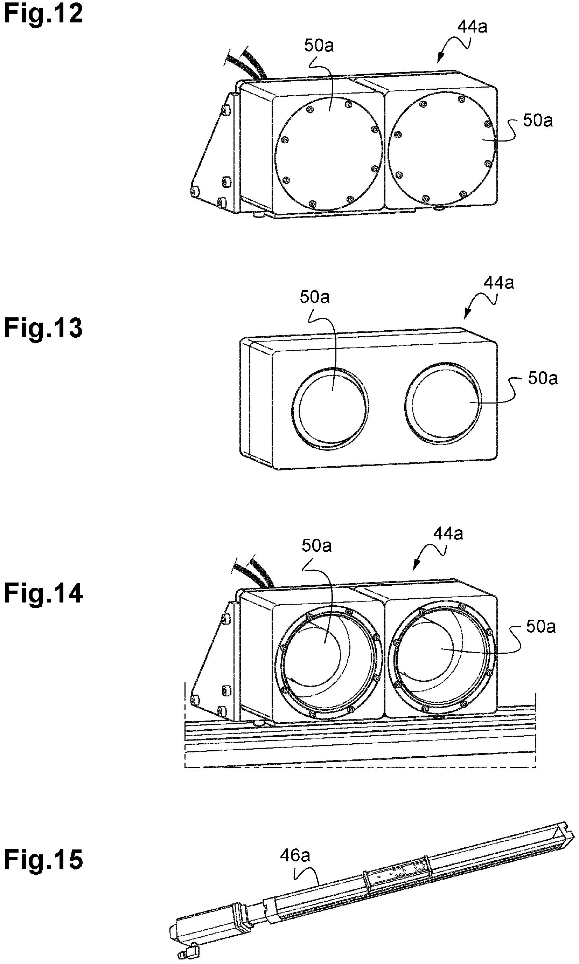

Figures 8-10 show the first radar system 44a and the first linear drive 46a. The first radar system 44a is mounted to the first linear drive 46a. The first linear drive 46a is arranged to move the first radar system 44a linearly along an axis that is parallel to the rotation axis 14a of the first roll 14. The first radar system 44a comprises at least one radar unit 50a (see Figs 12-14) that is directed towards the outer surface of the roll 14. The radar unit 50a is configured to emit a radar beam onto the outermost surface of the roll and receive a reflected radar beam from the outermost surface of the roll. The radar unit is designed for the radar beam to form a spot on the roll 14. In some examples, the spot of the radar beam has a diameter of between 7mm and 13 mm on the surface defined by the outermost points of the intact and unworn studs of the roll.

In operation, the outermost surface of the roll 14 may be made up of any or all of: the outer surface of the roll 14, the studs 28, and the autogenous layer 30. That is, when the roll 14 is completely clean, e.g., before first use or after refurbishment, the outermost surface detected by the radar unit 50a will comprise the outer surface of the roll 14 and the studs 28. After a brief period of use, an autogenous layer 30 may have built up between some but not all of the studs 28, such that some of the outer surface of the roll is still exposed. In this case, the outermost surface detected by the radar unit 50a will comprise some portions of the outer surface of the roll 14, the studs 28, and some portions having the autogenous layer 30. After more use, the autogenous layer 30 may completely cover the outer surface of the roll and may even, in some places, extend just over the tops of some of the studs 28. In this case, the outermost surface detected by the radar unit 50a comprises the autogenous layer 30 and some (or all) of the studs 28.

The first linear drive 46a is mounted at a fixed distance from the axis 14a of the roll 14. This means that, in the absence of any wear on the outer surface of the roll 14, the radar system 44a is held at a fixed distance from the outer surface of the roll 14. This fixed distance is preferably set as between 5 cm and 30 cm. The studs 28 extend above the outer surface of the roll 14 such that the distance between an unworn stud 28 and the radar system 44a is less than the fixed distance. The autogenous layer 30 extends above the outer surface of the roll such that the distance between the autogenous layer 30 and the radar system 44a is less than the fixed distance.

During operation of the HPGR 10, the first linear drive 46a moves the first radar system 44a back and forth along the axial length of the roll 14. In some examples, the first linear drive 46a moves the first radar system in a continuous motion. During this time, the roll 14 is rotating. As such, the spot of the radar beam describes a spiral shape over the outermost surface of the roll 14. By adjusting the speed of rotation of the roll 14 and, in particular, the speed of scanning back and forth of the first linear drive 46a, the radar system 46a can map out the entire outermost surface of the roll 14.

Alternatively, the first linear drive 46a may be configured to move the radar system 44a in a stepwise fashion. For example, it may move the first radar system by a fixed increment after an integer number of full rotations of the roll 14 (e.g., after one full rotation of the roll 14 or after two full rotations of the roll 14 etc.). In this case, the spot of the radar beam will sweep out a series of axially-adjacent circles on the outermost surface of the roll 14. In the test unit shown in Figure 9, the linear drive is a rexroth linear drive, typically of Model number Model MKK-065-NN-3 R030544889, with a total length of 131 cm and a drive length of 75 cm. This linear drive is shown in Figure 15 as well.

The first linear drive 46a may in some examples move the first radar system 44a in steps of 1mm per revolution of the roll 14. In other examples, it may move the first radar system 44a in 2mm steps. In the example rolls shown, the studs 28 are arranged in a regular repeating pattern showing distinctly spaced rows, each spaced apart by a row distance. The first linear drive 46a may be configured to move the first radar system 44a in steps equal to the row distance, such that the radar system gets one measurement of the surface of each stud 28 in a given row (e.g., taken from the center of each stud) before being moved to the next row of studs 28. This exemplary procedure may lose some of the fine detail of the height map compared to closer-spaced measurements but may allow much faster generation of a map of the entire outermost surface of the roll. This process may be especially useful when one is solely interested in rapidly identifying missing or shortened studs 28 across the entire roll.

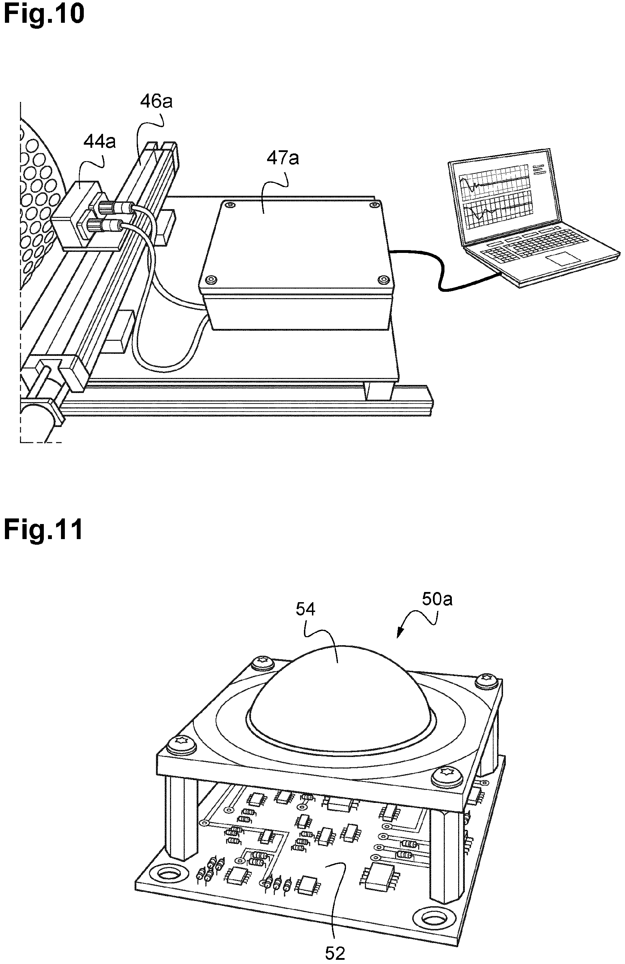

Figure 11 is a photograph of an exemplary radar unit 50a. The pictured radar unit 50a has a FWCW radar chip mounted on an RF board 52 and a plano convex lens 54. The radar unit 50a may be configured to operate with a frequency of 120-140 GHz. The radar unit shown in Figure 11 is a Silicon Radar, 120 - 140 GHz radar unit, such as the Indie Semiconductor TRA_120_045. In other examples, an elliptic lens may be used instead of a plano convex lens.

The radar system 44a may comprise two radar units 50a arranged adjacent one another and examples of these are shown in Figures 12-14. A first of the radar units 50a may be configured to emit a radar beam having a first polarization (e.g., polarized in the x-direction) and a second of the radar units 50a may be configured to emit a radar beam having a second polarization that is orthogonal to the first polarization (e.g., polarized in the y-direction). This may overcome noise in the signal and compensate for the backscatter loss. The cross or angled polarization can help improve the signal rx/tx quality because the waves get scattered based on the surface difference.

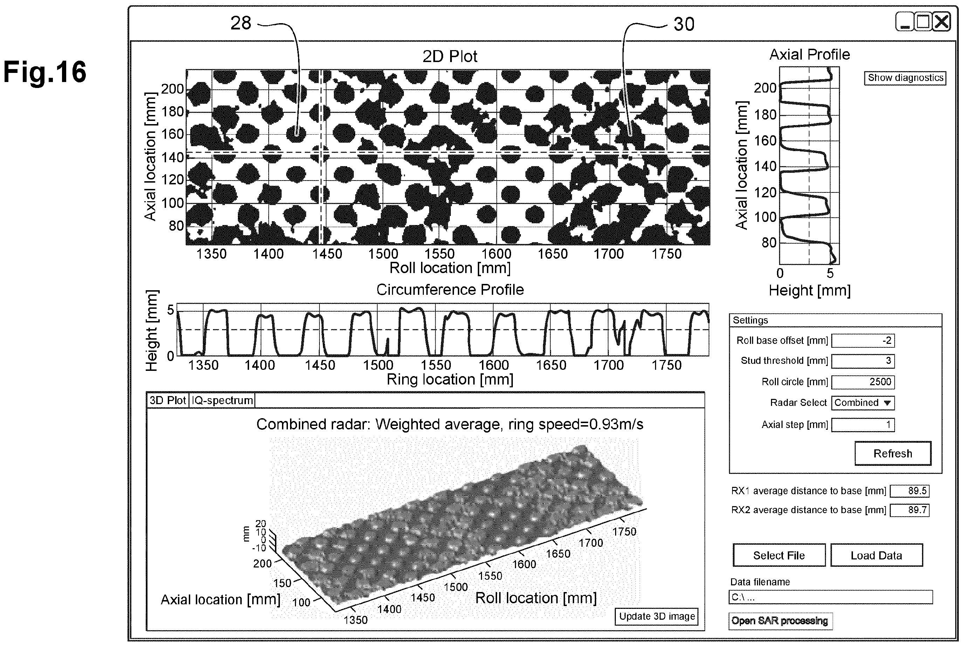

The or each radar unit 50a provides an output signal that is processed to determine a distance between the radar unit and the outermost surface of the roll 14. The output signal may be processed into a distance either by the first radar system 44a or by the control unit 48. The control unit 48 is configured to combine the distance data with the speed data from the speed sensor 42a and position data from the first linear drive 46a to determine any or all of: wear of the studs 28, breakage of a stud (which may appear as a significantly reduced height of stud or a stud that is entirely missing from its expected position on the roll), thickness of the autogenous layer 30, wear on the outer surface of the roll 14. The control unit 48 may be configured to generate a height map of the outermost surface of the roll 14. An example height map is shown in Figure 16. Alternatively, the height map may be generated by the computer 49, based on data received from the control unit 48.

In a test unit, the following components were used for signal processing the output from the radar units: Processor demo board (Zynq ZC702) and ADC demo board (AD7606CFMC) and a custom adapted board. Processing of the data into the height map was done using MATLAB
The first radar system 44a may be operated as a synthetic-aperture radar.

In the height map in the upper portion of Figure 16, the studs 28 are clearly visible as blue circles. The map is calibrated such that when the radar system detects a distance that is equal to the fixed distance (which is the outer surface of the roll 14), the map shows white. In the height map, some regions of autogenous layer 30 are also visible as speckling between the studs 28.

The height map in the lower portion of Figure 16 is a 3D false-colour rendering of the height map of the upper portion of Figure 16.

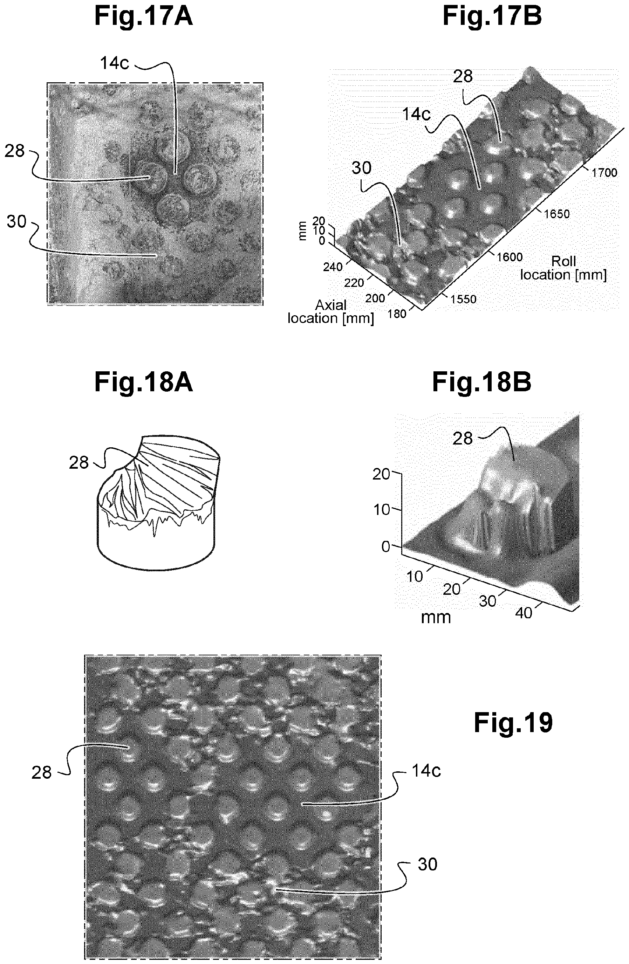

Figure 17A shows a photograph of a portion of a roll where studs 28 are visible, as well as some autogenous layer 30, and where a clean area 14c exists between four studs, such that the outer surface of the roll 14 is visible. Figure 17B shows the 3D height map determined from the same portion of roll as shown in Figure 17A. In Figure 17B, the afore-mentioned four studs appear clearly defined above the outer surface of the roll (i.e., relative to the clean area 14c which is the bare outer surface of the roll 14). The other areas of the height map show varying amounts of the autogenous layer 30 between the other studs 28.

Figure 18A shows a photograph of a chipped stud 28. Figure 18B shows a height map of that same chipped stud 28. The uneven upper surface of the stud 28 may be clearly discerned in the height map of Figure 18B determined from the radar data.

Figure 19 shows a height map of another portion of a roll 14 where multiple studs 28 are clearly visible, as is a clear area 14c of the outer surface of the roll 14 and also some areas having autogenous layer 30.

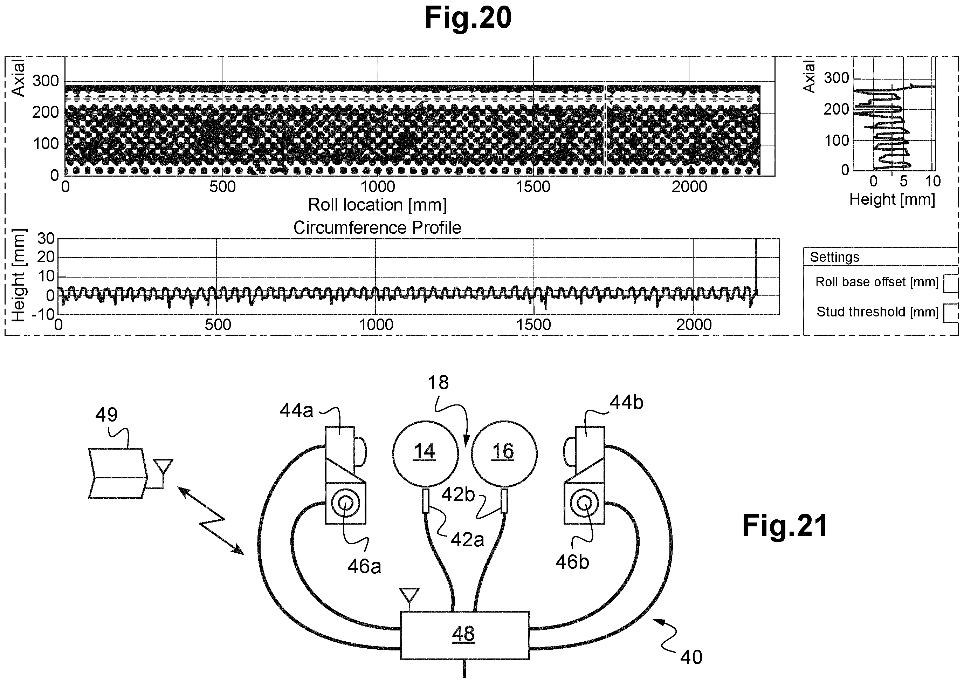

Figure 20 shows another height map of the outermost surface of a roll. In this case, the roll has one or more end plates 26 at one axial end. These show up on the map as the continuous horizontal blue line at the top portion of Figure 20. Thus, the radar system additionally allows for monitoring of the one or more end plates 26, e.g., to detect wear or breakage of the end plate(s) 26.

Figure 21 shows an alternative arrangement in which there is no separate linear drive control 47a, and instead the first linear drive 46a is connected directly to the control unit 48, and the control unit 48 is configured to control the first linear drive 46a. All other features of this alternative arrangement are identical to the arrangement described hereinabove in relation to Figures 1-19.

The first linear drive 46a preferably has a length that encompasses the entire axial length of each roll, such that the radar system 44a may be moved to scan the entire outermost surface of the roll 14. The first linear drive 46a may further preferably have a length additionally encompassing any end plates 26 of the roll (which, if present, may be either only at one end of the roll or at both ends of the roll), such that the first radar system 44a additionally scans over the end plates 26. This may allow the control unit 48 to additionally monitor wear or damage on the one or more end plates 26, in addition to monitoring the outermost surface of the roll 14.

The monitoring system 40 has been described above in relation to monitoring one roll, the first roll 14. In some examples, the monitoring system 40 may be configured to monitor only the second roll 16 or to monitor both the first and second rolls 14, 16. In this case of monitoring both rolls 14,16, there is provided a second radar system 44b mounted on a second linear drive 46b. There is provided a second speed sensor 42b arranged to measure the rotational speed of the second roll 16. The second linear drive 46b is mounted at a second fixed distance from the outer surface of the second roll 16 - the second fixed distance may be the same as or different from the first fixed distance. The second linear drive unit 46b is arranged to move the second radar system 44b along an axis parallel to the axis of rotation of the second roll 16. In use, the second linear drive 46b scans the second radar system 44b back and forth across the axial length of the second roll 16. The second radar system 44b outputs distance data to the control unit 48 in the same manner as described above for the first radar system 44a. The control unit 48 in this example may therefore monitor both rolls 14,16 simultaneously. Again, the control unit 48 may be communicatively connected to an external computer 49 (laptop, PC etc.) and it may be the height map is only graphically generated by the computer 49.

The second speed sensor 42b may be of identical construction to the first speed sensor 42a, as described hereinabove. The second radar system 44b may be of identical construction to the first radar unit 44a, as described hereinabove. The second linear drive 46b may be of identical construction to the first linear drive 46a, as described hereinabove. The second linear drive control 47b may be of identical construction to the first linear drive control 47a, as described hereinabove.

During operation of the HPGR 10, a large amount of airborne dust is generated from the crushed material. Radar, particularly radar in the frequency range of 120-350 GHz, or more preferably 120-140 GHz or 250-300 GHz, may be able to penetrate the airborne dust and reliably measure the distance to the outermost surface of the roll. This is in contrast to prior monitoring solutions using visible light which is easily scattered by the airborne dust, which can make accurate measurement difficult.

In one test, the roll 14 was rotated multiple times while the radar system 44a was held static, such that the repeatability of measurements could be determined by scanning the same set of studs multiple times. The radar system was found to have a repeatability of the order of 0.01 mm. That is, multiple measurements of the height of the same stud, taken over multiple rotations of the roll, were identical to the order of 0.01 mm. The pure distance measurement accuracy of a wideband, millimeter-wave FMCW radar is of the order of tens of micrometers.

During operation, both rolls 14,16 experience vibration due to the significant forces involved in crushing material such as rocks and minerals. Therefore, it is preferred to mount the linear drive firmly relative to the roll rotational axis (whether this is the fixed roll or the movable/floating roll) such that any movement of the rotational axis also causes movement of the linear drive, such that the relative positions of the roll and the linear drive are fixed as far as possible.

During operation, the rotational speed of the roll may vary, e.g., due to variations in the material being crushed at any given instant. Thus, it is preferable to accurately measure the instantaneous rotational speed of the roll and use this data when forming the height map. This allows the spacing between different radar measurements to be accurately determined. In one example, the speed sensor was configured to take four measurements of the speed per revolution of the roll. This was achieved by providing four metal pieces on an axle of the roll, spaced apart by equal angles (i.e., 90 degrees apart, in this example) to be detected by the induction-based speed sensor. This was found to provide sufficiently accurate speed information for a roll during use, where the roll has some variation in rotational speed over each revolution, such that the height map could be accurately generated.

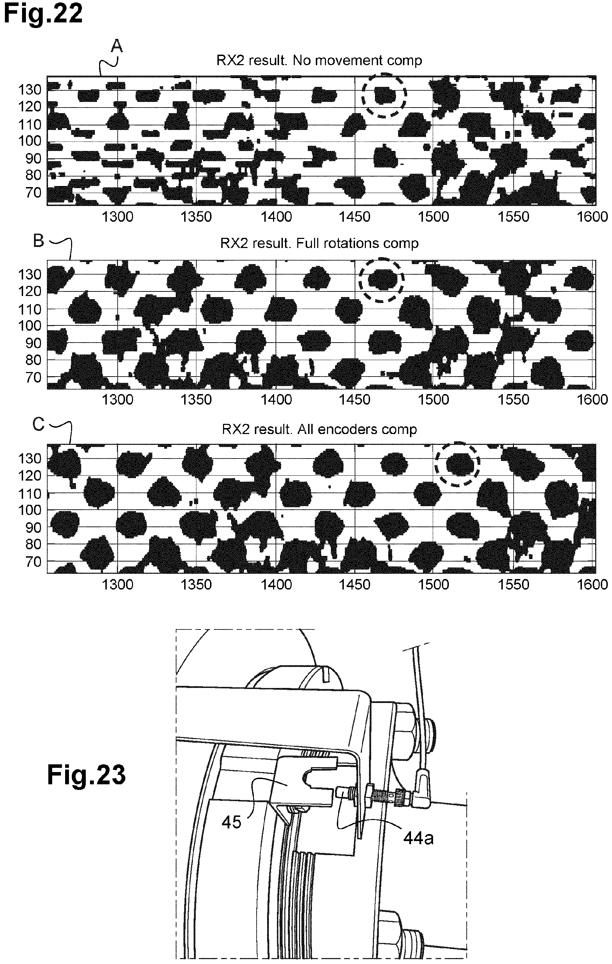

Figure 22 shows a comparison of heigh maps generated using different methods of determining roll rotational speed. In height map A, no compensation algorithm was used, i.e. the map was generated assuming a constant rotational speed of the roll. Height map B was generated using a compensation algorithm that used data from a speed sensor detecting a single point (i.e., single metal piece) on the roll, i.e., taking a single measurement of roll speed during each full revolution. Height map C was generated using a compensation algorithm that used data from a speed sensor detecting a four equally spaced points (i.e., four metal pieces) on the roll, i.e., taking four measurement of roll speed during each full revolution. As may be seen by comparing the three maps, the true circular profile of the studs 28 appears far more clearly in map C, compared to maps A and B. This indicates that four speed measurements per revolution provides a reasonable height map.

Figure 23 is a photograph showing the speed sensor 44a and the aforementioned metal piece 45 that has a central cutout. This metal piece causes the speed sensor 44a to detect two closely spaced peaks, which can allow easy determination that this particular metal piece is passing the sensor, which indicates a full revolution of the roll as there is only one metal piece with a central cutout on the roll axle.

An alarm system may be implemented in the monitoring system 40. The alarm system may be generated in the control unit 48 or in the computer 49, or both. Control unit (or computer) is configured to continuously monitor for any feature changes beyond 1 mm (in any directions) between successive scans of the same part of the roll. A change >2mm may indicate e.g., that a given stud 28 has been chipped or has broken off the roll. The alarm system may identify the failure point in relation to the actual roll surface. That is, the alarm may be not only indicative that one or more studs have been chipped or broken, but also identifies which specific stud(s) have been chipped or broken, so that a technician can quickly locate the damaged stud on the actual roll and replace it. Even though this is preferably not preferred, the alarm system may optionally output an emergency stop signal to stop rotation of the rolls 14,16 when broken stud is detected.

The monitoring system 40 may be configured to have a wear measurement mode, which is to be performed while the HPGR machine is running (i.e., the rolls are rotating) but not grinding material. In this mode, the amount of wear of the studs 28 and the outer surface of the roll may be measured to the accuracy of 0.1 mm change in the height direction. Studs that are worn down by more than a predetermined amount, e.g., more than 1mm, may be identified by the monitoring system 40 and their locations on the actual roll surface may be indicated. This may allow a technician to quickly locate worn studs on the actual roll surface and replace them during a maintenance period.

**List of reference numerals**

| | |
|---|---|
| HPGR | 10 |
| Hopper | 12 |
| First roll | 14 |
| First roll rotation axis | 14a |
| First roll rotation direction | 14b |
| Clean area (outer surface of roll) | 14c |
| Second roll | 16 |
| Second roll rotation axis | 16a |
| Second roll rotation direction | 16b |
| Gap | 18 |
| Drive motors | 20,22 |
| Skew control system | 24 |
| End plates | 26 |
| Studs | 28 |
| Autogenous layer | 30 |
| Monitoring system | 40 |
| First speed sensor | 42a |
| Second Speed sensor | 42b |
| First radar system | 44a |
| Second radar system | 44b |
| Metal piece | 45 |
| First linear drive | 46a |
| Second linear drive | 46b |
| First linear drive control | 47a |
| Second linear drive control | 47b |
| Control unit | 48 |
| Computer | 49 |
| Radar unit(s) | 50a |
| RF board | 52 |
| Plano convex lens | 54 |

The following illustrations are provided as part of this description. Formal drawings follow after the claims.

## Claims

1. A high pressure grinding roll (HPGR) machine for grinding material, comprising,
a first roll, the first roll having a longitudinal rotational axis and having a cylindrical outer surface,
a first plurality of studs mounted on and extending radially outward from the outer surface of the first roll;
a second roll, the second roll having a longitudinal rotational axis and having a cylindrical outer surface,
the first roll and the second roll being arranged such that their longitudinal axes are parallel, such that a gap is formed between the outer surfaces of the rolls;
a first radar system arranged to emit a radar beam onto an outermost surface of the first roll and to produce a first radar system output indicative of a distance between the radar system and the outermost surface of the first roll;
wherein the outermost surface of the first roll comprises one or more of: the outer surface of the first roll, the plurality of studs, and an autogenous layer of crushed material adhering to the outer surface of the roll; the machine further comprising
a monitoring system comprising processing means connected to the radar system and configured to analyse the first radar system output and determine a condition of the outermost surface of the first roll.

2. The HPGR machine according to claim 1 wherein the first radar system is a synthetic aperture radar.

3. The HPGR machine according to any preceding claim, wherein the radar system is mounted on a linear drive, wherein the linear drive is arranged to move the radar system along an axis parallel to the longitudinal rotational axis of the first roll, to allow the first radar system to scan the entire axial length the first roll, wherein the monitoring system is configured to use positional information from the linear drive in the process of determining a condition of the outermost surface of the first roll.

4. The HPGR machine according to claim 3, further comprising a first speed sensor for determining a rotational speed of the first roll, the first speed sensor communicatively connected to the monitoring system; wherein the monitoring system is configured to use speed data from the first speed sensor to calibrate data received from the first radar system and from the linear drive, to form a height map of the outermost surface of the roll.

5. The HPGR machine according to any preceding claim, wherein the processing means are configured to have a first operational mode and a second operational mode.

6. The HPGR machine according to claim 5, wherein
the first operational mode is a continuous scanning mode in which the current distance measured between the first radar system and a given location on the outermost surface of the roll is compared to a previously-measured distance between the first radar system and the given location that was measured during a previous revolution of the roll, and wherein the monitoring system is configured to output an alert when the current distance is different from the previously-measured distance by more than a predetermined amount, the alert indicating the location on the roll corresponding to the given location, optionally wherein the predetermined amount is 2 mm.

7. The HPGR machine according to claim 5 or 6, wherein
the second operational mode is a wear measurement mode to be performed while the rolls are rotating and no grinding material is present in the gap, wherein a processing means is configured to identify a distance from the first radar system to each stud of the plurality of studs, and to determine a height of each stud above the outer surface of the roll to an accuracy of greater than 0.5 mm; wherein the processing means is further configured to compare the determined height of each stud to an expected height that is derived from a stud in the new condition, and to calculate a wear condition of each stud based on the difference between the determined height and the expected height.

8. The HPGR machine according to claim 7, wherein the processing means is configured to identify a set of worn studs, being studs whose wear condition is below a predetermined threshold, and output the location on the roll outer surface of each stud of the set of worn studs.

9. The HPGR machine according to any preceding claim, further comprising a second radar system arranged to monitor a second plurality of studs on the outer surface of the second roll, and configured to produce a second radar system output to the monitoring system, wherein the second radar system output is indicative of a distance between the second radar system and the outermost surface of the second roll.

10. The HPGR machine according to any preceding claim, wherein the HPMG machine comprises a housing and a skew control mechanism,

11. The HPGR machine according to any preceding claim, wherein the longitudinal axis of the first roll is fixed relative to the housing, and wherein the longitudinal axis of the second roll is movable relative to the housing such that the size of the gap is variable, wherein the second roll is operably connected to the skew control mechanism, wherein the skew control mechanism is configured to control movement of the longitudinal axis of the second roll and thereby control the size of the gap.

12. The HPGR machine according to any of claims 1-10, the wherein the longitudinal axis of the second roll is fixed relative to the housing, and wherein the longitudinal axis of the first roll is movable relative to the housing such that the size of the gap is variable, wherein the first roll is operably connected to the skew control mechanism, wherein the skew control mechanism is configured to control movement of the longitudinal axis of the first roll and thereby control the size of the gap.

13. The HPGR machine according to any of claims 10-12, wherein the skew control mechanism is further configured to maintain the longitudinal axes of the rolls parallel to each other.
